Europäisches Patentamt

European Patent Office

Office européen des brevets

(11) Publication number: **0 353 621**
**A2**

## EUROPEAN PATENT APPLICATION

(21) Application number: 89113806.7

(22) Date of filing: 26.07.89

(51) Int. Cl.⁴: **B60C 9/00 , B60C 9/20**

(30) Priority: 01.08.88 JP 194174/88

(43) Date of publication of application:
07.02.90 Bulletin 90/06

(84) Designated Contracting States:
DE FR GB

(71) Applicant: SUMITOMO RUBBER INDUSTRIES
LIMITED
No. 1-1, Tsutsui-cho 1-chome
Chuo-ku Kobe-shi Hyogo 651(JP)

(72) Inventor: Kohno, Masatsugu
3-122, Kamizono-cho
Nishinomiya-shi Hyogo(JP)

(74) Representative: Dipl.-Phys.Dr. Manitz
Dipl.-Ing.Dipl.-Wirtsch.-Ing. Finsterwald
Dipl.-Phys. Rotermund Dipl.-Chem.Dr. Heyn
B.Sc.(Phys.) Morgan
Robert-Koch-Strasse 1
D-8000 München 22(DE)

(54) Steel cord ply and tire using the same.

(57) A steel cord reinforced ply assembly such as would be used in a tire carcass or breaker. Each cord is made up of a plurality of strands twisted in one direction and the strand of an adjacent parallel cord are twisted in the opposite direction so that the ply assembly will have greater uniformity and ease in bending into proper position in the tire.

Fig. 1

# STEEL CORD PLY AND TIRE USING THE SAME

## BACKGROUND OF THE INVENTION

The present invention generally relates to a steel cord ply in which steel cords different in twist-direction from each other are disposed parallel to each other, and more particularly relates to a radial tire in which uniformity is improved by using the subject steel cord ply.

## PRIOR ART

Recently, radial tires using steel cords have been widely used. For example, plies using such steel cords are used in belts in radial tires for passenger cars so as to generate a strong hoop effect, are used as belts and carcasses in radial tires for trucks or busses so as to improve endurance, and are further employed as various kinds of reinforcing layers.

In such a ply, steel cords are disposed parallel to each other and embedded in an elastomer such as rubber. Each steel cord is formed such that a plurality of filaments are strand-twisted, and a plurality of strand-twisted strands are further rope-twisted.

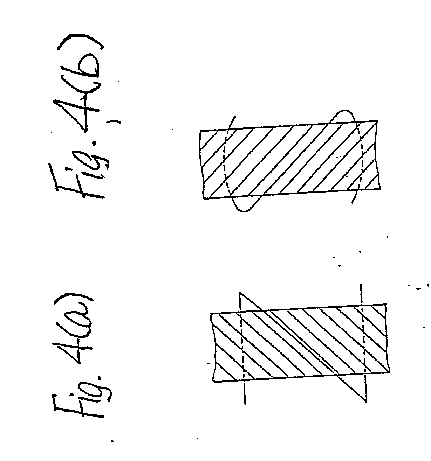

According to standard textile terminology twists are called "S-twist" and "Z-twist", depending upon the twist-direction as shown in Figs. 4(a) and 4(b) respectively. Within this terminology, there are regular-lay ropes in which the strand twist-direction and the rope twist-direction are different from each other. A second type of rope is a Lang's lay rope in which the strand twist-direction and the rope twist-direction are the same as each other. In a conventional ply using such steel cords, one kind of steel cords is disposed side by side with similar cords. Whether the normal twist rope or a Lang's lay twist is used is a matter of choice.

## PROBLEMS THAT THE INVENTION IS TO SOLVED

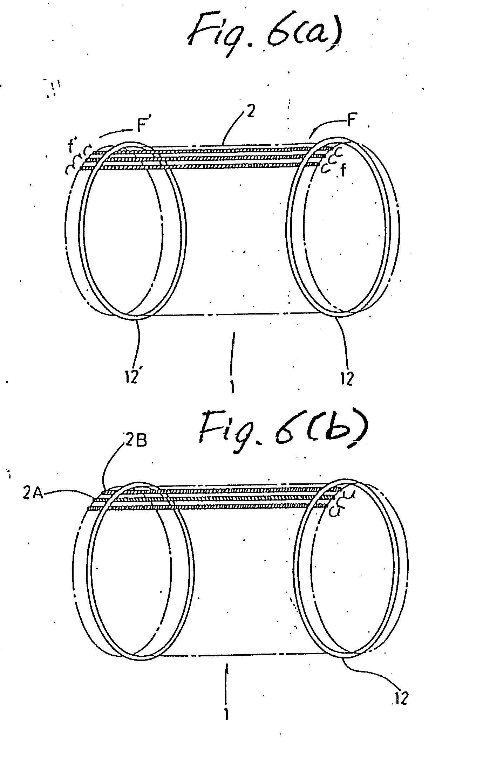

In a ply produced with one kind of steel cords disposed in parallel to a similar cord, each cord is stressed in a direction opposite to the twist-direction of the cord, so that a warp "A" transformed in one direction is generated in molding a tire as shown in Fig. 5, and the transformation disturbs the balance or uniformity and thus the straight tracking ability of the tire. Further, even in the tire after molding, stress in a predetermined direction is exerted on each cord to affect the uniformity.

An object of the present invention is to provide a tire in which the uniformity is improved by using a ply in which steel cords or groups of steel cords opposite to each other in twist-direction are alternatively disposed.

## OBJECT OF THE INVENTION

The present invention relates to a steel cord ply in which steel cords opposite to each other in twist-direction are disposed next to each other in a tire carcass or breaker belt, and relates to a radial tire using such a ply.

Since the respective forces exerted onto one or the other of adjacent steel cords are opposite in direction to each other, the forces cancel each other so that the transformation can be suppressed and the transformative stress exerted onto the cords in the tire can be decreased, thereby improving the uniformity and quality of the tire.

Further objects and advantages will become apparent to those skilled in the art upon a review of the following detailed description and attached drawings.

## BRIEF DESCRIPTION OF THE DRAWINGS

Fig. 1 is a perspective view showing a ply by way of example by using the tire according to the present invention;

Figs. 2 and 3 are sectional views showing cords by way of example respectively;

Fig. 4 is a diagram for explaining the twist-direction;

Fig. 5 is a perspective view showing the transformation of a conventional steel cord layer;

Fig. 6(a) is a schematic diagram showing the relation between a conventional steel cord and a conventional bead core; and

Fig. 6(b) is a schematic diagram showing the relation between the steel cord and the bead cord according to present invention.

## DETAILED DESCRIPTION OF A PREFERRED EMBODIMENT

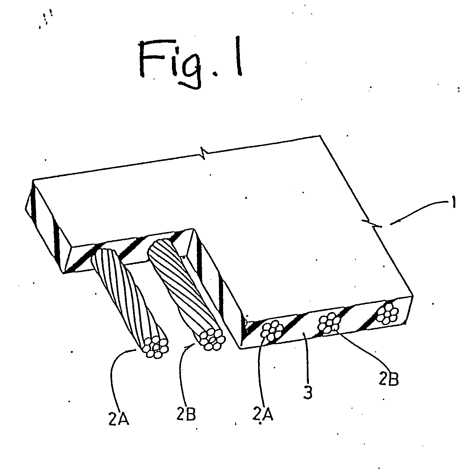

Referring to the drawings, an embodiment of the present invention will now be described. Fig. 1 schematically shows a steel cord ply (hereinafter simply referred to as a "ply"), in which steel cords 2A and steel cords 2B are alternately disposed parallel to each other in an elastomeric layer 3. The steel cords 2A have a Z-twist and the steel cords 2B have an S-twist so that adjacent steel cords 2 A and 2B are opposite to each other in twist-direction. Although in Fig. 1 the steel cords 2A and 2B are alternately disposed next to each other in a one cord to one cord ratio, in this embodiment, a group composed of 1 to 5 steel cords 2A and another group composed of 1 to 5 steel cords 2B may be alternately disposed on the basis of one group. If a group of cords is used then it is preferably that the cords of each group be equal in number. For example if there are 3 Z-twist cords then there should also be 3 Z-twist cords.

If the number of the steel cords in one and the same group exceeds five, the uni-directionally transformative stress becomes so large as to undesirably generate corrugation of the steel cord ply. Although steel cords different in size from each other may be disposed, it is preferably to dispose steel cords having the same size because the transformative stress can be easily reduced or controlled.

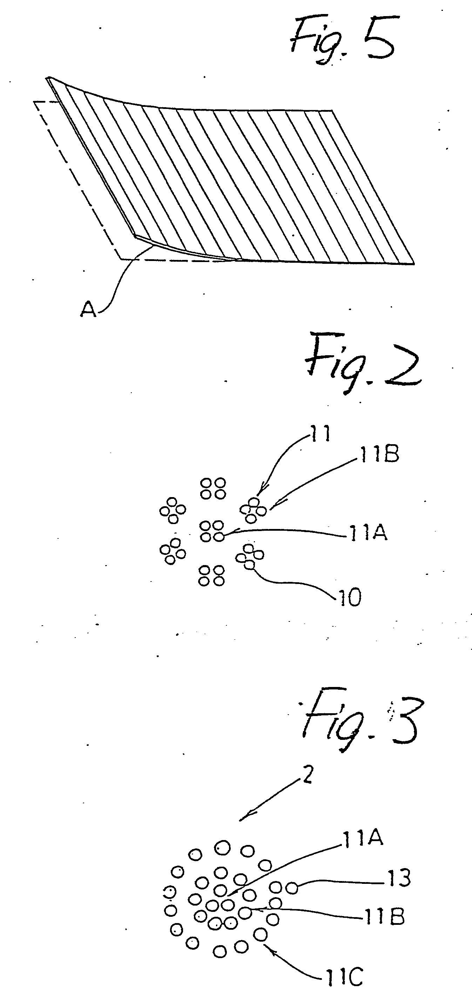

In the embodiment as shown in Fig. 2 the steel cord 2 may be, for example, a cord having the size of 7 × 4/0.175 which is formed of rope-twisted seven strands 11 consisting of six peripheral strands 11B disposed about one central strand 11A, each strand 11 consisting of four filaments 10 which are strand-twisted together. When the cord 2 is of a normal twist, each of the strands 11A and 11B is itself of the S-twist variety, and the rope formed by them is of the Z-twist variety. If each of the strands 11A and 11B of the steel cord 2 is of the Z-twist variety, then the rope thereof is of the S-twist variety.

When the cord 2 is of the Lang's lay twist, on the contrary, each of the strands 11A and 11B of the steel cord 2A is of Z-twisted and the rope thereof is also of Z-twisted, while the whole of the steel cord 2B is S-twisted. Because it is superior in flexibility, a Lang's lay structure may be preferably used for forming the ply 1 for a tire according to the present invention.

Fig. 3 shows a cross section of a steel cord 2 having the size of 3 + 9 + 15/0.175 + 1/0.15. This cord 2 is not rope-twisted but is formed by twisting filaments 10 into a plurality of layers. The cords 2 having their outermost layers twisted in the directions opposite to each other and are alternatively disposed one cord by one cored to thereby form a ply 21. In each steel cord 2A (see Fig. 1), central strands 11A are S-twisted, intermediate strands 11B and outermost strands 11C are Z-twisted. A lapping wire 13 (Fig. 3) spirally wound around the outermost strands 1C in the S-twist direction. In each steel cord 2B, central strands 11A are Z-twisted, intermediate strands 11B and outermost strands 11C are S-twisted. A lapping wire 13 is spirally would around the outermost strands 11C in the Z-twist direction.

Figs. 6(a) and 6(b) are views showing the relation between a bead core 12 and the steel cord 2. Fig. 6(a) is a view in which a carcass ply 1 (shown by one-dotted chain line) made of the conventional S-twist steel cords 2 disposed side by side is disposed inside the annular bead core 12 in a tire molding process. In this point in time, pressure is applied from the inside of the carcass ply 1 so as to press the carcass ply 1 onto the bead core 12. After other members have been struck onto the elastomer layer 3, pressure is further applied to the carcass ply 1 so as to expand the carcass ply 1. At this time, tension is exerted onto the steel cord 2, so that rotational forces represented by $f$ and $f'$ are generated. The forces F and $F'$, proportional to the difference between the sum of the forces $f$ and $f'$, generated in the respective cords and the resistance force due to viscoelasticity of rubber covering the cords act on the bead cores 12 and $12'$. When the pressure for expansion is removed, the bead cores 12 and $12'$ becomes displaced from each other, so that each of the cords becomes displaced by 90 degrees relative to a set equatorial surface of the tire. The thus produced so-called raw cover or carcass is vulcanized under high pressure in a vulcanizing machine. In that time, the displacement is further increased. The displacement affects the quality of the tire and emphasizes the desirability of a better way of laying out the cords to avoid that situation.

Fig. 6(b) is a view showing the relation between the bead core 12 and the steel cord 2 according to the improvement of the present invention. The rotational force exerted on the Z-twisted steel cord 2A and the rotational force exerted onto the S-twisted steel cord 2B cancel each other, so that the forces F and $F'$ are not generated, and no displacement of the bead cords is generated thus it is far easier to prepare a tire for vulcanizing with the cords being uniformly distributed.

Tires were produced by using such a ply 1 as carcasses of tires having a size of 10.00R20 14PR. Any of the tires according to the present invention was superior in uniformity to a tire in which a ply made of only the conventional steel cords 2A or 2B was used as a carcass thereof.

In addition to the carcass, when the ply was used as a belt and particularly as a belt nearest to the carcass, more superior uniformity could be obtained.

Further, when a steel cord ply according to the present invention was used as a bead reinforcing layer, undesired bending of the carcass cord of a finished tire could be prevented, so that not only the uniformity but also the endurance could be improved.

## EFFECTS OF THE INVENTION

In a tire made according to the present invention, the above-mentioned ply was used, so that transformation of the steel cord layer in molding the tire could be prevented, the uniformity of the tire could be improved, and the overall performance of the tire including its straight tracking ability could be improved.

## Claims

1. A steel cord enforced ply comprising a layer of elastomer reinforced by a plurality of generally parallel steel cords, each cord comprising a plurality of twisted together strands, with adjacent cords or groups of adjacent cords being of a different twist-direction.

2. The ply of Claim 1 in which all of the steel cords are of the same size.

3. The ply of Claim 1 in which the cords are arranged to have a group of five or fewer cords having the same twist-direction adjacent each other and disposed parallel thereto a second group of cords having an equal number of cords but having the opposite twist-direction.

4. The ply of Claim 1 in which the steel cords have a Lang's structure.

5. A vehicle tire having a carcass, a belt and a bead reinforcing layer, at least one of said carcass, said belt and said bead reinforcing layer, comprising a steel cord ply having an elastomer reinforced by a plurality of steel cords, said steel cords being generally parallel to each other, each cord comprising a plurality of twisted together strands, with adjacent cords or groups of adjacend cords being of a different twist direction.

6. The tire of Claim 5 in which all of the steel cords are of the same size.

7. The tire of Claim 5 in which the cords are arranged to have a group of five or fewer cords having the same twist direction adjacent each other and disposed parallel thereto a second group of cords having an equal number of cords but having the opposite twist-direction.

8. The tire of Claim 5 in which the steel cords have a Lang's lay structure.

# Fig. 1

EP 0 353 621 A2

SP1925

Fig. 5

A

Fig. 2

11

11B

11A

10

Fig. 3

2

11A

13

11B

11C

SP1925

EP 0 353 621 A2

Fig. 4(a)     Fig. 4(b)

## Fig. 6(a)

EP 0 353 621 A2

## Fig. 6(b)